# EUROPÄISCHE PATENTSCHRIFT

(11) **EP 3 829 036 B1**
(45) Veröffentlichungstag und Bekanntmachung des Hinweises auf die Patenterteilung: **21.05.2025**
(21) Anmeldenummer: 20208821.7
(22) Anmeldetag: 20.11.2020
(51) Int. Cl.: H02K 3/28, H02K 3/12

(54) **STATOR MIT PINS FÜR EINE ELEKTRISCHE MASCHINE**
STATOR WITH PINS FOR AN ELECTRIC MACHINE
STATOR POURVU DE BROCHES POUR UNE MACHINE ÉLECTRIQUE

(30) Priorität: 26.11.2019 DE 102019131973
(43) Veröffentlichungstag der Anmeldung: 02.06.2021
(73) Patentinhaber: Valeo eAutomotive Germany GmbH, 91056 Erlangen (DE)
(72) Erfinder: DOTZ, Boris, 81241 München (DE)

(56) Entgegenhaltungen:
- EP-A1- 3 096 441
- WO-A2-2012/072754
- DE-A1- 102010 053 719
- DE-T5- 112013 006 691
- US-A1- 2011 025 162
- US-B2- 9 136 738

## Beschreibung

Die Erfindung betrifft einen Stator mit Pins für eine elektrische Maschine, insbesondere einen Elektromotor.

### Stand der Technik

Elektrische Maschinen sind allgemein bekannt und finden als Elektromotor zunehmend Anwendung für den Antrieb von Fahrzeugen. Eine elektrische Maschine besteht aus einem Stator und einem Rotor.

Der Stator umfasst eine Vielzahl von Nuten, in welchen die Windungen geführt werden. Die Windungen können aus isolierten Kupferstäben als sogenannte Pins gebildet werden. Der Rotor befindet sich im Stator und ist mit einer Rotorwelle verbunden.

Ein solcher Pin-, UPin- oder Hairpinmotor ist beispielsweise aus DE 11 2013 006 691 T5, DE 10 2010 053 719 A1, EP 3 096 441 A1, US 2011/0025162 A1, WO 2012/072754 A2 oder US 9,136,738 B2 bekannt.

### Aufgabe und Lösung

Aufgabe der vorliegenden Erfindung ist es, einen Stator nach Anspruch 1 mit Windungen aus Pins bereitzustellen, der einfach zu fertig ist.

Erfindungsgemäß umfasst ein Stator für eine elektrische Maschine eine Vielzahl von Pins, die auf konzentrischen Kreisen mit unterschiedlichen Abständen zu einem Statormittelpunkt in Nuten im Stator angeordnet sind, und jeder konzentrische Kreis einen Layer bildet, wobei jeweils vier Pins in unterschiedlichen Layer miteinander seriell verbunden sind und eine Windung bilden, ein erster Pin der Windung befindet sich in einer ersten Nut im 4n-1 Layer, wobei n eine natürliche Zahl ist, ein zweiter Pin der Windung befindet sich in einer zweiten Nut im 4n Layer, wobei die zweite Nut einen ersten radialen Abstand in einer ersten Umfangsrichtung des Stators zu der ersten Nut aufweist, ein dritter Pin der Windung befindet sich in einer dritten Nut im 4n-2 Layer, wobei die dritte Nut benachbart zur ersten Nut liegt, ein vierter Pin der Windung befindet sich in einer vierten Nut im 4n-3 Layer, wobei die vierte Nut benachbart zur zweiten Nut liegt. Die Layer können von außen nach innen zum Statormittelpunkt aufsteigend nummeriert werden. Die natürlichen Zahlen umfassen nicht die Null.

Ein Stator mit der erfindungsgemäßen Wicklung lässt sich einfach herstellen und erzeugt ein effizientes elektromagnetisches Feld mit weniger Eisen- bzw.

Ummagnetisierungsverlusten, sowie eine bessere Ausnutzung des Eisenblechpaketes. Die Verbindungsarten stellen eine elektrisch leitfähige Verbindung zwischen den Pins in den Nuten her. Die Verbindungsart kann ein Anschweißen von Leitern an die Pins sein oder die Pins können bereits als Doppelpin, sogenannte Upins ausgebildet sein und dadurch bereits beim Einführen in den Stator eine Verbindung herstellen. Ferner stellt auch ein Verschweißen von zueinander gebogenen Endabschnitten von Pins eine Verbindungsart dar.

Erfindungsgemäß liegen die dritte und vierte Nut in Umfangsrichtung auf einer gleichen Nachbarschaftsseite der ersten und zweiten Nut.

Das mit einer solchen Windung erzeugte Drehfeld weist weniger störende Harmonische auf und hat dadurch weniger Torqueripple und kleinere Drehmomentschwankungen, sowie ein besseres NVH Verhalten.

Erfindungsgemäß liegt zwischen der ersten Nut und der zweiten Nut sowie zwischen der dritten und der vierten Nut ein erster Abstand und zwischen der dritten und der zweiten Nut ein zweiter Abstand, und ist der zweite Abstand kleiner als der erste Abstand.

Ein Stator mit den auf Nuten mit verschieden Abständen verteilten Windungen weist weniger ohmsche AC Verluste und eine geringere Sättigung auf.

Gemäß der Erfindung weist der Stator eine erste und eine zweite Stirnseite auf und sind der erste und zweite Pin auf der zweiten Stirnseite mittels einer ersten Verbindungsart miteinander verbunden, der zweite Pin und der dritte Pin auf der ersten Stirnseite mittels einer zweiten Verbindungsart miteinander verbunden, der dritte Pin und der vierte Pin auf der zweiten Stirnseite mittels einer dritten Verbindungsart miteinander verbunden, wobei sich die erste, zweite und dritte Verbindungsart voneinander unterscheiden. Die unterschiedlichen Verbindungsarten ermöglichen eine verbesserte Fertigung. Eine abwechselnde Lage der Verbindungsarten auf verschiedenen Stirnseiten ermöglicht das effiziente Bilden einer Windung um die zwischen den Nuten liegenden Statorzähne.

Selbst Verbindungsarten auf derselben Stirnseite des Stators können sich durch unterschiedliche Biegerichtungen eines Pinfußes zum Statorinneren oder äußeren unterscheiden.

Eine Kombination der vorher genannten Verbindungsarten auf unterschiedlichen oder gleichen Stirnseiten des Stators ist auch möglich. Durch eine gleiche Verbindungsart auf gleichen Stirnseiten und verschiedenen Verbindungsarten auf unterschiedlichen Stirnseiten des Stators ist eine einfache und schnelle Fertigung möglich. Beispielsweise wird auf einer Stirnseite die Verbindung durch eine Art vorgebogene Pins, sogenannte Doppelpins oder auch Upins genannt, hergestellt und auf einer anderen Stirnseite des Stators werden Pins einzeln oder jeweils eine Seite des Doppelpins miteinander verschweißt. Die Schweißpunkte können an Füßen der Pins oder Doppelpins liegen.

Erfindungsgemäß weist der Stator zumindest zwei Windungen auf und ist zumindest der vierte Pin in der vierten Nut mit einem fünften Pin im 4n-1 Layer in einer fünften Nut mittels einer vierten Verbindungsart verbunden.

Erfindungsgemäß weist der Stator eine Vielzahl von Windungen auf, die sich über den gesamten Umfang des Stators erstrecken und dabei eine Teilspule bilden.

Die Wicklungen weisen dadurch eine Symmetrie auf, welche ein gleichmäßiges Drehfeld erzeugt.

In einer weiteren Ausgestaltung kann je ein Pin von zwei Teilspulen mittels einer fünften Verbindungsart oder einer sechsten Verbindungsart miteinander verbunden sein und eine Spule bilden.

Bei diesen Pins kann es sich um sogenannte Endpins handeln, da sie das Ende einer Teilspule markieren.

Bevorzugt können die Teilspulen sechs Spulen bilden und diesen derart drei Phasen zugeordnet sein, dass sich jeweils zwei Spulen, die einer gleichen Phase zugeordnet sind, in drei benachbarten Nuten befinden und dabei jeweils zwei Layer der beiden äußeren Nuten mit Pins von anderen Phasen belegt sein. Weiter bevorzugt kann ein Eingang von mindestens zwei Spulen mittels einer siebten Verbindungsart miteinander verbunden sein.

Die siebte Verbindungsart kann durch einen an den Pins angebrachten Leiter oder durch einen leitenden Ring hergestellt werden.

In einer bevorzugten Ausgestaltung der Erfindung kann ein Ausgang von mindestens zwei Spulen miteinander verbunden sein und die zwei Spulen dadurch parallelgeschaltet und insbesondere einer Phase zugeordnet sein.

Die beiden Spulen können parallel verbunden sein und können zusätzlich von einer gleichen Phase gespeist werden. Die Parallelverbindung kann durch das paarweise Verbinden von einem ersten und einem fünften oder vierten und einem achten Endpin erfolgen.

Ferner können jeweils zwei Phasen einen annährend identischen Strom- und Spannungsverlauf aufweisen und dadurch ein sechs Phaseninverter lediglich einen dreiphasigen Motor ansteuern. Mit dieser Anordnung ist eine Stromteilung der Schaltelemente im Inverter möglich.

Zwei Spulen in gleichen Nuten können somit parallelgeschaltet und von einer Phase gespeist werden, sodass ein Stator mit Wicklungen für eine dreiphasige elektrische Maschine entsteht.

Erfindungsgemäß weist ein Fahrzeug eine elektrische Maschine mit einem Stator gemäß einer der bevorzugten Ausgestaltungen auf.

### Figurenbeschreibung

- Figur 1: zeigt einen Stator.
- Figur 2: zeigt einen Stator mit acht Nuten und vier Layer.
- Figur 3: zeigt ein Wickelschema einer ersten Teilspule.
- Figur 4: zeigt ein Wickelschema einer zweiten Teilspule.
- Figur 5: zeigt einen Stator mit einer ersten und zweiten Teilspule und deren Verbindung miteinander und somit eine erste Spule.
- Figur 6: zeigt ein Wickelschema einer weiteren Teilspule.
- Figur 7: zeigt ein Wickelschema einer weiteren Teilspule.
- Figur 8: zeigt einen Stator mit zwei weiteren Teilspulen und deren Verbindung miteinander und somit eine zweite Spule.
- Figur 9: zeigt einen Stator mit zwei Spulen, bestehend aus jeweils zwei Teilspulen.
- Figur 10: zeigt einen Stator mit zwei weiteren Spulen.
- Figur 11: zeigt einen Stator mit zwei weiteren Spulen.
- Figur 12: zeigt einen Stator mit sechs Spulen.
- Figur 13: zeigt ein Windungsschema von zwei Spulen.
- Figur 14: zeigt ein Fahrzeug mit einer elektrischen Maschine, insbesondere einem Elektromotor, mit einem Stator mit einem Inverter.

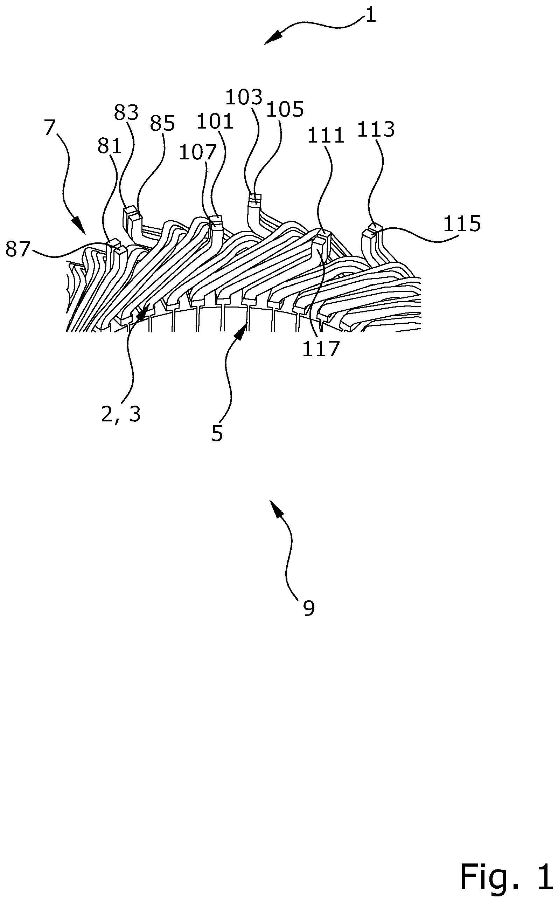

Figur 1 zeigt einen Stator 1 mit einer Vielzahl an Nuten 5 in welchen Pins 2, 3 geführt werden. Der Stator 1 weist eine erste Stirnseite 7 und eine gegenüberliegende zweite Stirnseite 9 auf. Auf der ersten Stirnseite 7 sind Eingänge 81, 87, 101, 107, 111, 117 und Ausgänge 83, 85, 103, 105, 113, 115 von Teilspulen zum Anschluss der Pins an eine Energiequelle zum Betrieb der elektrischen Maschine gezeigt. Selbstverständlich ist zum Betrieb einer elektrischen Maschine ferner ein Rotor nötig. Die Pins zum Anschluss liegen dicht beieinander und ermöglichen kurze Anschlussleitungen.

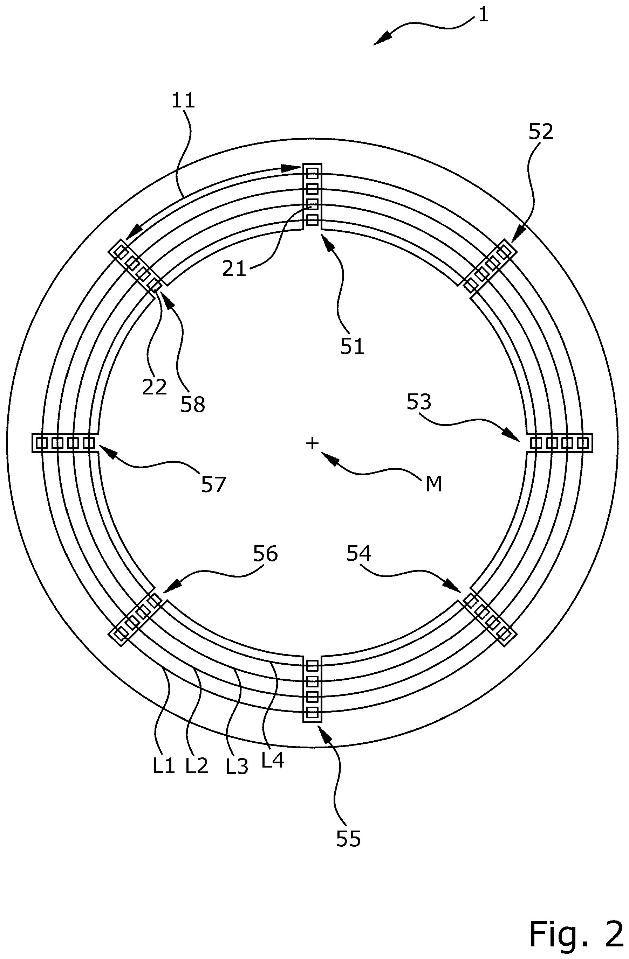

Figur 2 zeigt einen Stator 1 mit Nuten und Pins auf vier Layer, wobei lediglich acht Nuten 51, 52, 53, 54, 55, 56, 57, 58 dargestellt sind. In den Nuten sind Pins 21, 22 angeordnet. Die Pins liegen nebeneinander in einer Nut, im Beispiel der Figur 2 ist Platz für vier Pins nebeneinander in einer Nut. Die vier Pins innerhalb einer Nut liegen somit auf unterschiedlichen konzentrischen Kreisen L1, L2, L3, L4 um den Mittelpunkt M des Stators, die somit einzelne Layer bilden. Zwischen jeweils zwei Nuten liegt ein erster Abstand 11. Dieser erste Abstand 11 ist zwischen allen in Figur 2 gezeigten Nuten identisch.

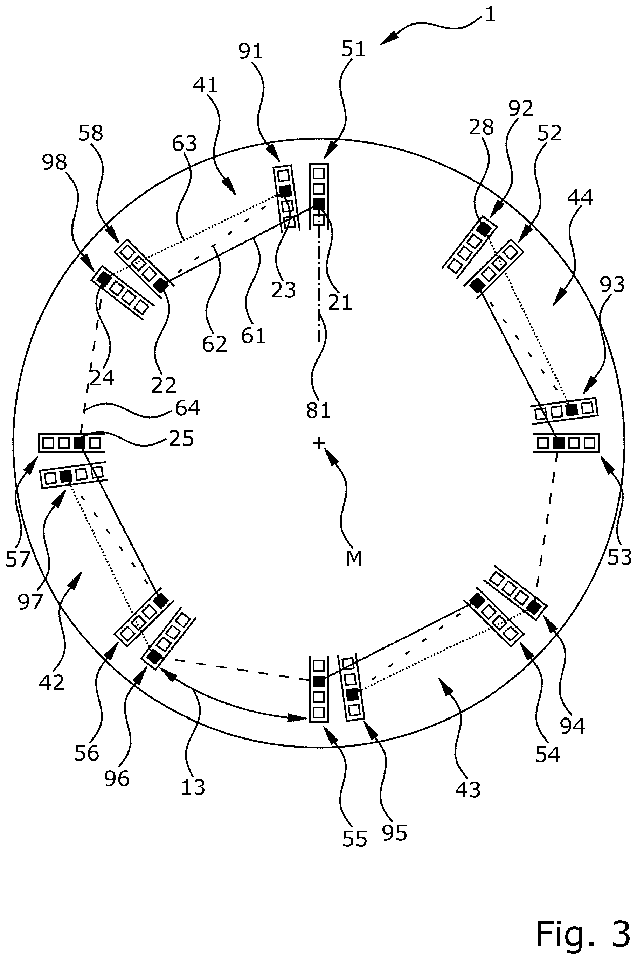

Figur 3 zeigt den Stator 1 aus Figur 2. Die Pins sind weiterhin auf konzentrischen Kreisen, also Layer, angeordnet, wobei die konzentrischen Kreise wegen einer besseren Darstellung nicht eingezeichnet sind. In Figur 3 ist dargestellt, welche Pins miteinander in Serie verbunden sind. Ein erster Pin 21, der auch gleichzeitig ein Endpin ist, befindet sich in einer ersten Nut 51 im Layer L3. Dieser erste Pin 21 ist mittels einer ersten Verbindungsart 61, als durchgezogene Linie dargestellt, mit einem zweiten Pin 22 in einer zweiten Nut 58 verbunden. Der zweite Pin 22 befindet sich im Layer L4. Der zweite Pin 22 ist mittels einer zweiten Verbindungsart 62, als kurz gestrichelte Linie dargestellt, mit einem dritten Pin 23 in einer dritten Nut 91 verbunden. Die dritte Nut 91 liegt radial benachbart neben der ersten Nut 51 und zwischen der ersten Nut 51 und der zweiten Nut 58. Der dritte Pin 23 liegt im Layer L2.

Die dritte Nut 91 weist einen zweiten Abstand 13 von der zweiten Nut 58 auf. Der zweite Abstand 13 ist eine Nut kürzer als der erste Abstand 11 aus der vorherigen Figur.

Für den Fachmann ist verständlich, dass sich die unterschiedlichen Abstände immer auf den gleichen Layer beziehen. Der Abstand zwischen zwei Nuten ist beispielsweise auf Layer 4 selbstverständlich geringer als auf Layer 1, da der Radius des Layer 4 kleiner als der des Layer 1 ist.

Der dritte Pin 23 ist über eine dritte Verbindungsart 63, als gepunktete Linie dargestellt, mit einem vierten Pin 24 verbunden. Der vierte Pin 24 liegt in einer vierten Nut 98. Die vierte Nut 98 liegt radial benachbart neben der zweiten Nut 58 und zwischen der zweiten Nut 58 und einer fünften Nut 57. Der vierte Pin 24 liegt im Layer L1.

Die Verbindung des ersten, zweiten, dritten und vierten Pins bildet eine erste Windung 41.

Der vierte Pin 24 ist mittels einer vierten Verbindungsart 64, als gestrichelte Linie dargestellt, mit einem fünften Pin 25 in der fünften Nut 57 verbunden. Der fünfte Pin 25 liegt im Layer L3. Mit dem fünften Pin 25 beginnt die vorher beschriebene serielle Verbindung der im Stator nachfolgenden Pins erneut, wobei der fünfte Pin 25 ähnlich zum ersten Pin 21 mit einem Versatz der Nut um 90 Grad ist. Der fünfte Pin 25 ist im Gegensatz zum ersten Pin 21 kein Endpin, da er mit zwei weiteren Pins verbunden ist, wohin gehend der erste Endpin 21 nur eine Verbindung zu einem Pin, also dem zweiten Pin 22, aufweist.

Die serielle Verbindung des fünften Pins 25 mit weiteren Pins in drei weiteren Nuten 56, 97 und 96 bildet eine zweite Windung 42. Die erste, zweite und dritte Verbindungsart 61, 62, 63 zwischen diesen Pins ist identisch zu der jeweiligen ersten, zweiten, dritten Verbindungsart 61, 62, 63 der Pins der ersten Windung 41.

Die beiden Windungen 41, 42 sind durch die vierte Verbindungsart 64 verbunden. Durch die Fortsetzung der seriellen Verbindung wird die dritte Windung 43 und vierte Windung 44 in vier weiteren Nuten 55, 54, 95 und 94, sowie 53, 52, 93, 92 gebildet. Die Windungen 41, 42, 43, 44 sind jeweils mit der vierten Verbindungsart 64 verbunden. Die vierte Verbindungsart 64 zwischen den jeweiligen Windungen ist somit identisch. Auch die erste, zweite und dritte Verbindungsart 61, 62, 63 zwischen den Pins der Windungen 43, 44 ist identisch zu der ersten, zweiten und dritten Verbindungsart 61, 62, 63 der ersten und zweiten Windung 41, 42.

Die vier Windungen 41, 42, 43, 44 bilden durch einen Umlauf um den Stator 1 entgegen dem Uhrzeigersinn eine erste Teilspule. Der erste Pin 21 weist ferner einen Eingang 81 für den Anschluss einer Energiequelle auf. Der erste Pin 21 der Windung 41 stellt somit einen ersten Endpin dar. Die Teilspule endet mit dem Pin 28 in Layer L1 der Windung 44. Der letzte Pin 28 der Windung 44 stellt somit einen zweiten Endpin dar.

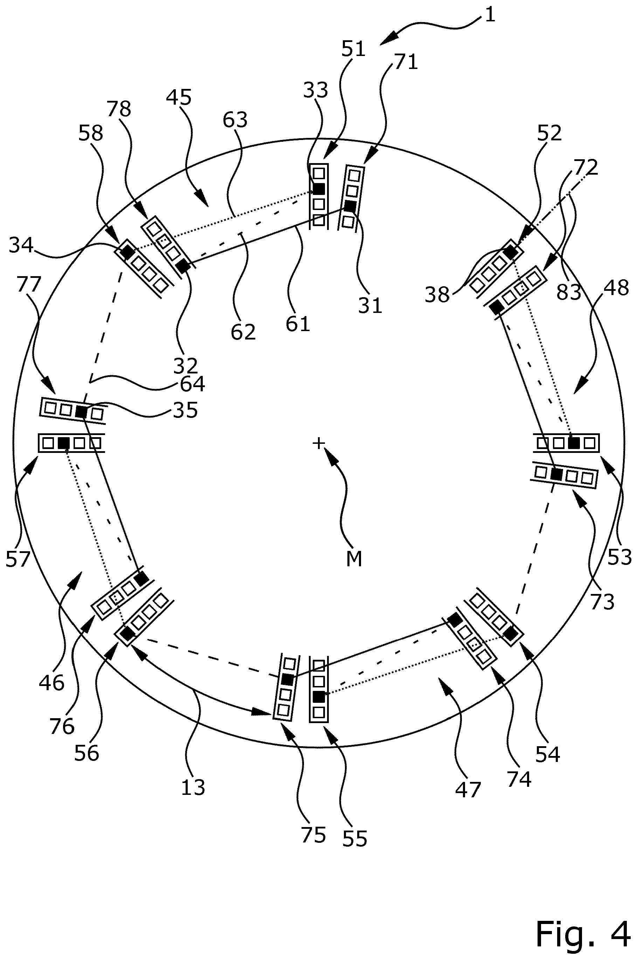

Figur 4 zeigt einen Stator 1, wobei dort acht weitere Nuten 71, 72, 73, 74, 75, 76, 77, 78 gezeigt sind.

Die Pins 31, 32, 33, 34, 35, 38 sind in gleicher Weise wie die Pins 21, 22, 23, 24, 25, 28 der Figur 3 verbunden. Selbst die Verbindungsarten sind identisch zur Figur 3 und durch die gleichen Bezugszeichen und Liniendarstellung deutlich gemacht. In gleicher Weise wie bei Figur 3 beschrieben, werden die Windungen 45, 46, 47, 48 gebildet und sind entgegen dem Uhrzeigersinn miteinander durch die vierte Verbindungsart 64 verbunden.

Die vier Windungen 45, 46, 47, 48 bilden durch einen Umlauf um den Stator 1 entgegen dem Uhrzeigersinn eine zweite Teilspule. Die Teilspule beginnt mit einem ersten Pin 31, der ein dritter Endpin ist. Die Teilspule endet mit dem Pin 38 der Windung 48. Der letzte Pin 38 der Windung 48 in Layer L1 stellt somit einen vierten Endpin dar. Der vierte Endpin 38 weist ferner einen Ausgang 83 für den Anschluss einer Energiequelle auf. Selbstverständlich können Eingang 81 und Ausgang 83 auch vertauscht werden.

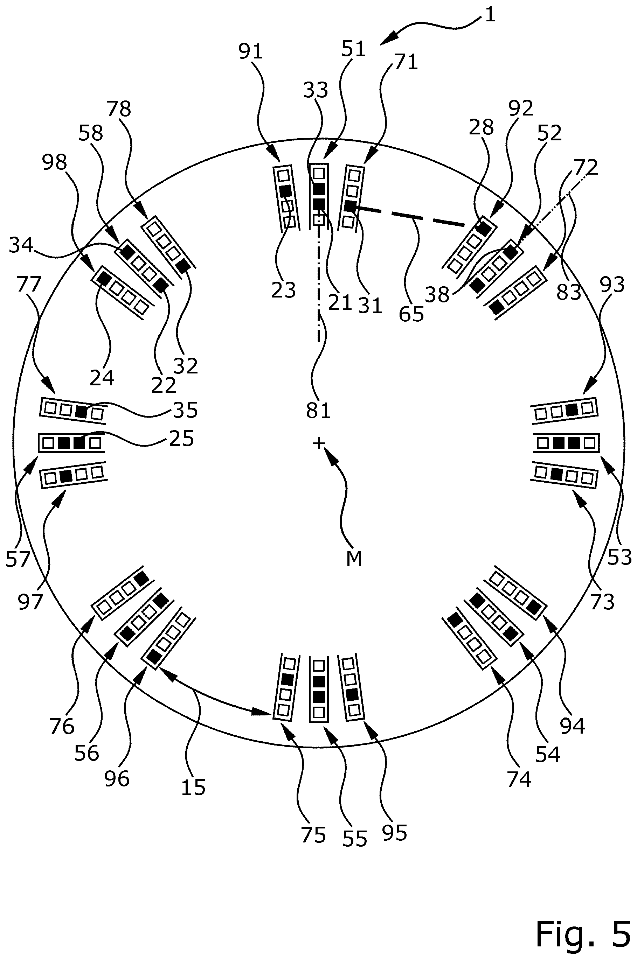

Figur 5 zeigt eine Pinbelegung durch die erste und zweite Teilspule aus Figur 3 und 4, welche durch schwarze Vierecke dargestellt sind. Gleiche Bezugszeichen bezeichnen gleiche Pins, Nuten, Verbindungen in den Figuren. Der sechste Pin 28 der vierten Windung 44 der ersten Teilspule in Nut 92, Layer L1, der auch ein zweiter Endpin ist, und der erste Pin 31 der ersten Windung 45 der zweiten Teilspule in Nut 71, Layer L3, der auch ein dritter Endpin ist, sind mit einer fünften Verbindungsart 65 verbunden.

Die zwei Teilspulen bilden somit eine erste Spule 201 mit einem Eingang 81 und einem Ausgang 83 nach zweimaligem radialen Umlauf um den Stator entgegen dem Uhrzeigersinn. Ein in der Figur dargestellter dritter Abstand 15 ist zwei Nuten kürzer als der erste Abstand 11 und eine Nut kürzer als der zweite Abstand 13 aus den vorherigen Figuren.

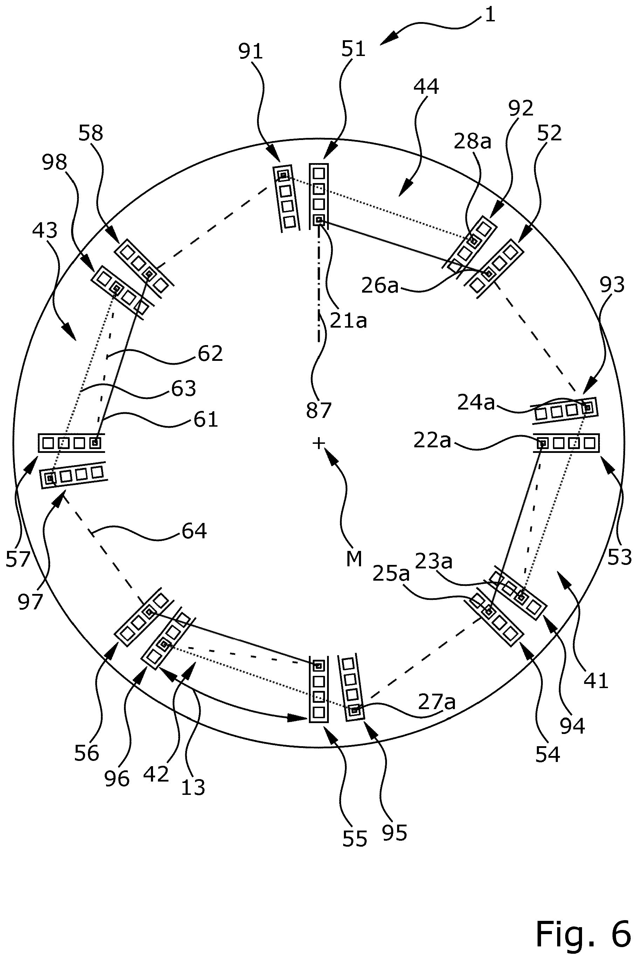

Figur 6 zeigt einen Stator 1. Die Pins sind weiterhin auf konzentrischen Kreisen, also Layer, angeordnet, wobei die konzentrischen Kreise wegen einer besseren Darstellung nicht eingezeichnet sind. Es ist dargestellt, welche Pins, als schwarze Vierecke auf weißem Grund dargestellt, miteinander in Serie verbunden sind und eine erste Teilspule einer zweiten Spule 202 bilden. Ein fünfter Endpin 21a befindet sich in der ersten Nut 51 im Layer L4. Der fünfte Endpin 21a weist ferner einen Eingang 87 für den Anschluss einer Energiequelle auf. Der fünfte Endpin 21a ist mittels der ersten Verbindungsart 61 mit einem sechsten Pin 26a in der Nut 52 verbunden. Der sechste Pin 26a befindet sich im Layer L3. Der sechste Pin 26a ist mittels der vierten Verbindungsart 64 mit einem vierten Pin 24a im Layer L1 in der Nut 93 verbunden.

Der vierte Pin 24a ist über eine dritte Verbindungsart 63, als gepunktete Linie dargestellt, mit einem dritten Pin 23a verbunden. Der dritte Pin 23a liegt in einer Nut 94. Die Nut 94 liegt radial benachbart neben der Nut 54 und zwischen der Nut 53 und der Nut 54. Der dritte Pin 23a liegt im Layer L2.

Der dritte Pin 23a ist über eine zweite Verbindungsart 62, als kurz gestrichelte Linie dargestellt, mit einem zweiten Pin 22a verbunden. Der zweite Pin 22a liegt in der Nut 53. Die Nut 53 liegt radial benachbart neben der Nut 93 und zwischen der Nut 93 und der Nut 94. Der zweite Pin 22a liegt im Layer L4.

Der zweite Pin 22a ist über eine erste Verbindungsart 61, als durchgezogene Linie dargestellt, mit einem fünften Pin 25a verbunden. Der fünfte Pin 25a liegt in der Nut 54. Die Nut 54 liegt radial benachbart neben der Nut 94 und zwischen der Nut 94 und der Nut 95. Der fünfte Pin 25a liegt im Layer L3. Die serielle Verbindung des ersten, zweiten, dritten und vierten Pins 25a, 22a, 23a, 24a bildet eine erste Windung 41.

Der fünfte Pin 25a ist über eine vierte Verbindungsart 64, als gestrichelte Linie dargestellt, mit einem siebten Pin 27a verbunden. Der siebte Pin 27a liegt in der Nut 95. Die Nut 95 liegt radial benachbart neben der Nut 55 und zwischen der Nut 55 und der Nut 54. Der siebte Pin 27a liegt im Layer L1. Mit dem siebten Pin 27a beginnt die vorher beschriebene serielle Verbindung der im Stator nachfolgenden Pins erneut, wobei der siebte Pin 27a ähnlich zum vierten Pin 24a mit einem Versatz der Nut um 90 Grad ist.

Die serielle Verbindung des siebten Pins 27a mit weiteren Pins in drei weiteren Nuten 96, 55 und 56 bildet eine zweite Windung 42. Die erste, zweite und dritte Verbindungsart 61, 62, 63 zwischen diesen Pins ist identisch zu der jeweiligen ersten, zweiten, dritten Verbindungsart 61, 62, 63 der Pins der ersten Windung 41.

Die beiden Windungen 41, 42 sind durch die vierte Verbindungsart 64 verbunden. Durch die Fortsetzung der seriellen Verbindung wird eine dritte Windung 43 in vier weiteren Nuten 97, 98, 57 und 58 gebildet.

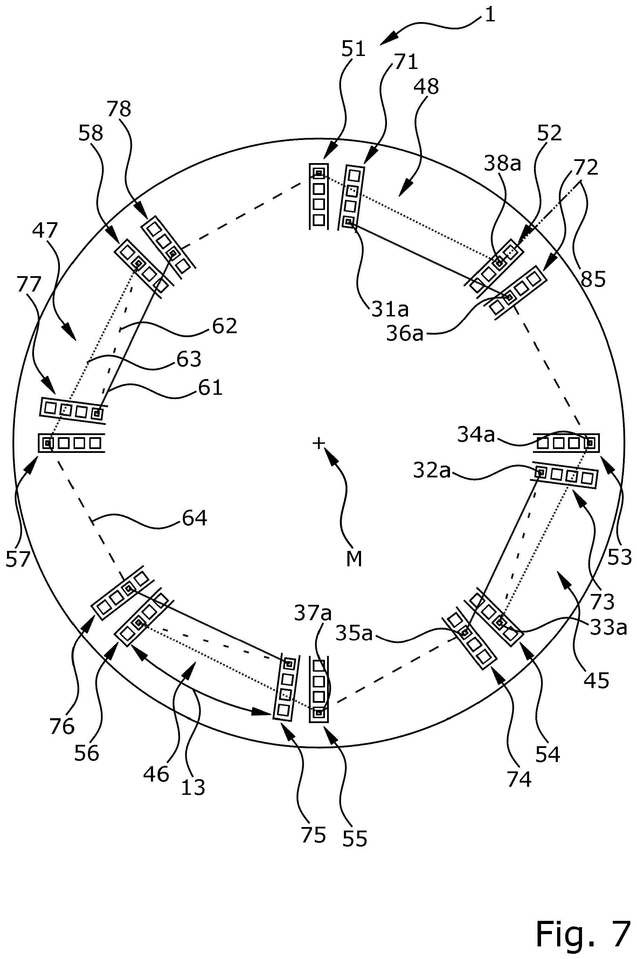

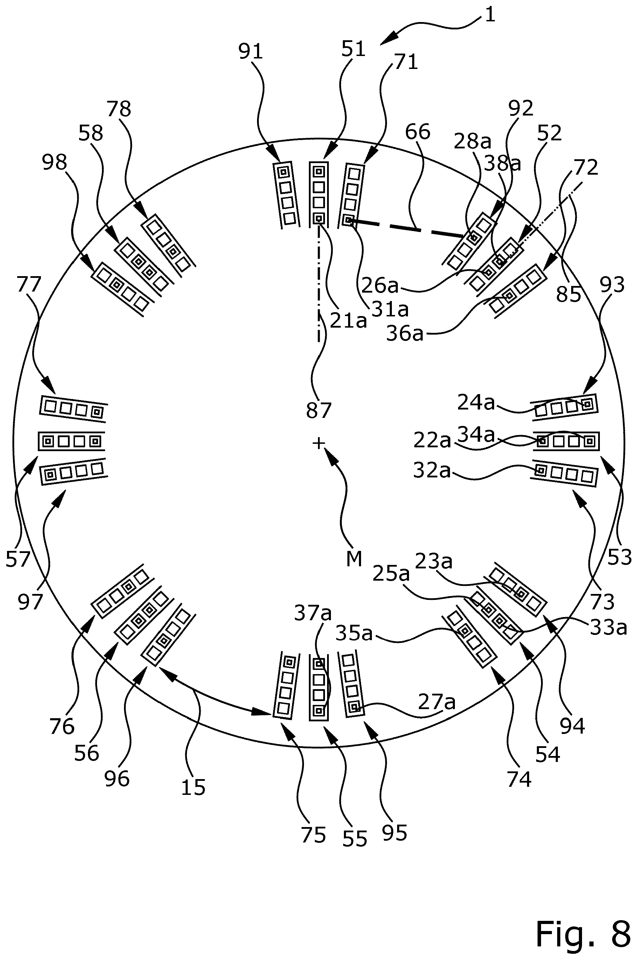

Eine vierte Windung 44 stellt eine Besonderheit dar, da diese keine zweite Verbindungsart aufweist. Diese Windung 44 wird durch eine sechste Verbindungsart 66 gebildet, die in Verbindung mit Figur 8 beschrieben und dort gezeigt ist. Die sechste Verbindungsart verbindet einen sechsten Endpin 28a der ersten Teilspule mit einem siebten Endpin 31a, der in Figur 7 gezeigt ist.

Figur 7 zeigt einen Stator 1, wobei dort acht weitere Nuten 71, 72, 73, 74, 75, 76, 77, 78 gezeigt sind.

Die Pins sind weiterhin auf konzentrischen Kreisen, also Layer, angeordnet, wobei die konzentrischen Kreise wegen einer besseren Darstellung nicht eingezeichnet sind. Es ist dargestellt, welche Pins, als schwarze Vierecke auf weißem Grund dargestellt, miteinander in Serie verbunden sind und eine zweite Teilspule einer zweiten Spule 202 bilden. Ein siebter Endpin 31a befindet sich in der Nut 71 im Layer L4. Dieser siebte Endpin 31a ist mittels der ersten Verbindungsart 61 mit einem sechsten Pin 36a in der Nut 72 verbunden. Der sechste Pin 36a befindet sich im Layer L3. Der sechste Pin 36a ist mittels der vierten Verbindungsart 64 mit einem vierten Pin 34a im Layer L1 in der Nut 53 verbunden.

Der vierte Pin 34a ist über eine dritte Verbindungsart 63, als gepunktete Linie dargestellt, mit einem dritten Pin 33a verbunden. Der dritte Pin 33a liegt in einer Nut 54. Die Nut 54 liegt radial benachbart neben der Nut 74 und zwischen der Nut 74 und der Nut 73. Der dritte Pin 33a liegt im Layer L2.

Der dritte Pin 33a ist über eine zweite Verbindungsart 62, als kurz gestrichelte Linie dargestellt, mit einem zweiten Pin 32a verbunden. Der zweite Pin 32a liegt in der Nut 73. Die Nut 73 liegt radial benachbart neben der Nut 53 und zwischen der Nut 53 und der Nut 54. Der zweite Pin 32a liegt im Layer L4.

Der zweite Pin 32a ist über eine erste Verbindungsart 61, als durchgezogene Linie dargestellt, mit einem fünften Pin 35a verbunden. Der fünfte Pin 35a liegt in der Nut 74. Die Nut 74 liegt radial benachbart neben der Nut 54 und zwischen der Nut 54 und der Nut 55. Der fünfte Pin 35a liegt im Layer L3. Die Verbindung des ersten, zweiten, dritten und vierten Pins bildet eine erste Windung 45.

Der fünfte Pin 35a ist über eine vierte Verbindungsart 64, als gestrichelte Linie dargestellt, mit einem siebten Pin 37a verbunden. Der siebte Pin 37a liegt in der Nut 55. Die Nut 55 liegt radial benachbart neben der Nut 75 und zwischen der Nut 75 und der Nut 74. Der siebte Pin 37a liegt im Layer L1. Mit dem siebten Pin 37a beginnt die vorher beschriebene serielle Verbindung der im Stator nachfolgenden Pins erneut, wobei der siebte Pin 37a ähnlich zum vierten Pin 34a mit einem Versatz der Nut um 90 Grad versehen ist.

Die serielle Verbindung des siebten Pins 37a mit weiteren Pins in drei weiteren Nuten 56, 75 und 76 bildet eine zweite Windung 46. Die erste, zweite und dritte Verbindungsart 61, 62, 63 zwischen diesen Pins ist identisch zu der jeweiligen ersten, zweiten, dritten Verbindungsart 61, 62, 63 der Pins der ersten Windung 45.

Die beiden Windungen 45, 46 sind durch die vierte Verbindungsart 64 verbunden. Durch die Fortsetzung der seriellen Verbindung wird die dritte Windung 47 in vier weiteren Nuten 57, 58, 77 und 78 gebildet. Die vierte Windung 48 stellt eine Besonderheit dar, da diese keine zweite Verbindungsart aufweist. Diese Windung 48 wird durch die sechste Verbindungsart 66 gebildet, die in Verbindung mit Figur 8 beschrieben und dort gezeigt ist.

Der achte Endpin 38a weist ferner einen Ausgang 85 für den Anschluss einer Energiequelle auf. Selbstverständlich können Eingang 87 und Ausgang 85 auch vertauscht werden.

Figur 8 zeigt eine Pinbelegung durch die beiden Teilspulen aus Figur 6 und 7, welche durch schwarze Vierecke auf weißem Grund dargestellt sind. Gleiche Bezugszeichen bezeichnen gleiche Pins, Nuten, Verbindungen in den Figuren. Der Pin 28a der vierten Windung 44 der ersten Teilspule in Nut 92, Layer L2, der auch ein sechster Endpin ist, und der erste Pin 31a der vierten Windung 48 der zweiten Teilspule in Nut 71, Layer L4, der auch ein siebter Endpin ist, sind mit einer sechsten Verbindungsart 66 verbunden.

Die zwei Teilspulen bilden somit eine zweite Spule 202 mit einem Eingang 87 und einem Ausgang 85 nach zweimaligem radialen Umlauf um den Stator mit dem Uhrzeigersinn. Ein in der Figur dargestellter dritter Abstand 15 ist zwei Nuten kürzer als der erste Abstand 11 und eine Nut kürzer als der zweite Abstand 13 aus den vorherigen Figuren.

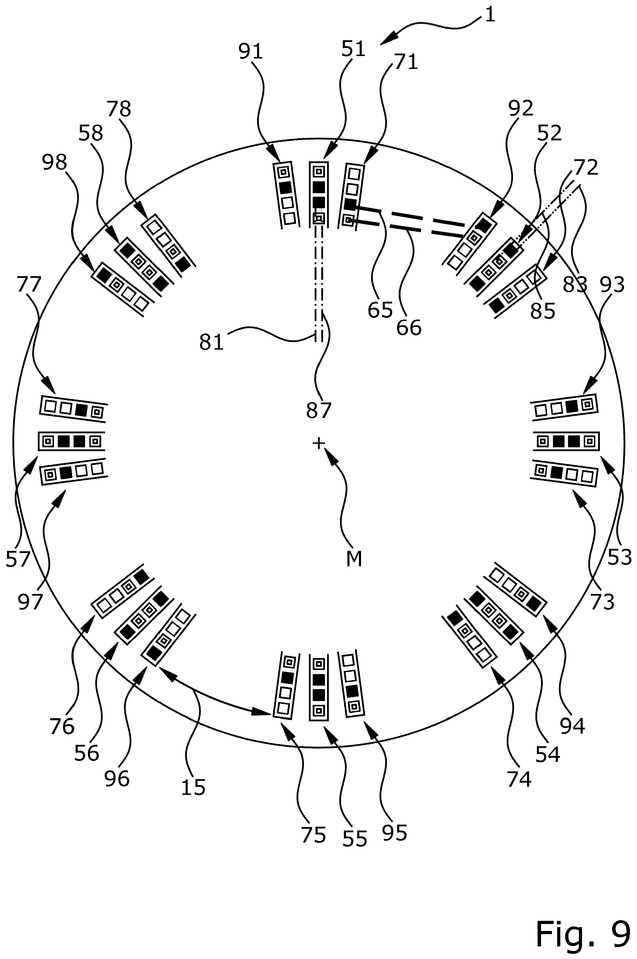

Figur 9 zeigt eine Pinbelegung durch die erste Spule 201 aus Figur 5, welche durch schwarze Vierecke dargestellt ist. Gleiche Bezugszeichen bezeichnen gleiche Pins, Nuten, Verbindungen in den Figuren. Ferner ist die zweite Spule 202 aus der Figur 8 als schwarze Vierecke auf weißem Grund dargestellt, die sich in gleichen Nuten aber unterschiedlichen Layer befindet. Die Teilspulen der beiden Spulen sind mit der fünften Verbindungsart 65 (erste Spule) oder der sechsten Verbindungsart 66 (zweite Spule) verbunden. Die beiden Verbindungsarten 65, 66 sind ähnlich und unterscheiden sich nur durch die Lage in unterschiedlichen Layer.

Es sind somit zwei Spulen gezeigt, die jeweils aus zwei Teilspulen bestehen. Ebenfalls sind die Ein- und Ausgänge der Spulen gezeigt. Der Eingang 81 der ersten Spule befindet sich an der Nut 51 und der Ausgang 83 an der Nut 52. Der Eingang 87 der zweiten Spule befindet sich ebenfalls an der Nut 51 und der Ausgang 85 an der Nut 52. Die Ein- und Ausgänge beider Spulen liegen somit in der jeweils gleichen Nut.

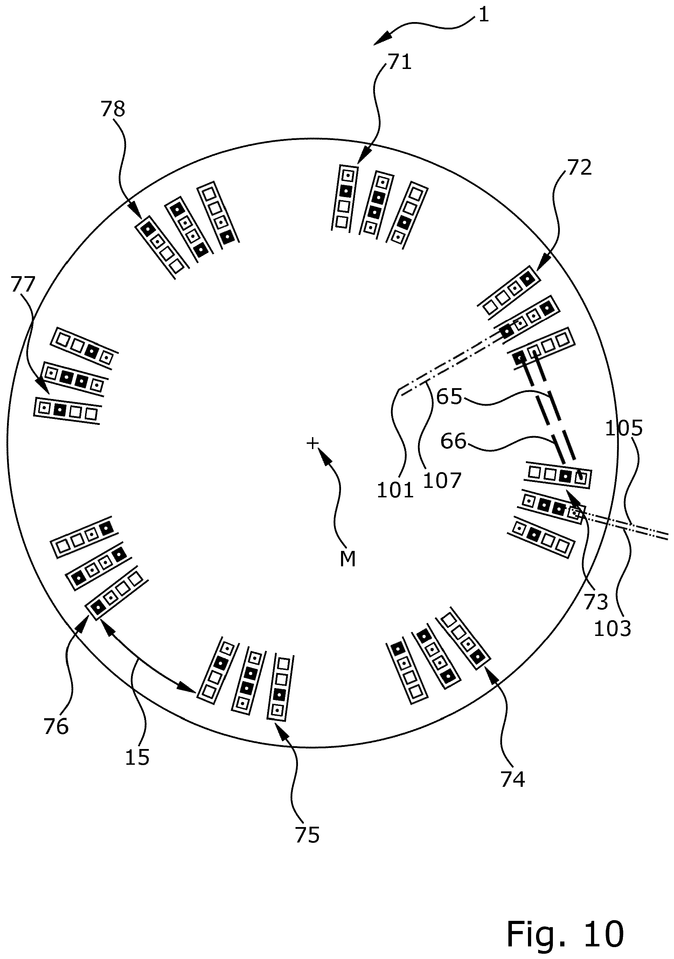

Figur 10 zeigt eine Pinbelegung durch eine dritte und vierte Spule in den schwarzen Vierecken mit weißem Punkt und den weißen Vierecken mit schwarzem Punkt. Diese entsteht durch ein aus den Figuren 3, 4, 5, 6, 7, 8 bekanntes Wickelschema, welches um je zwei Nuten mit dem Uhrzeigersinn im Vergleich zu den dort dargestellten Pins und Verbindungen der Teilspulen versetzt ist. Ebenfalls sind die Ein- 101 und Ausgänge 103 der dritten Spule und die Ein-107 und Ausgänge 105 der vierten Spule gezeigt. Die Ein- und Ausgänge beider Spulen liegen somit in der jeweils gleichen Nut.

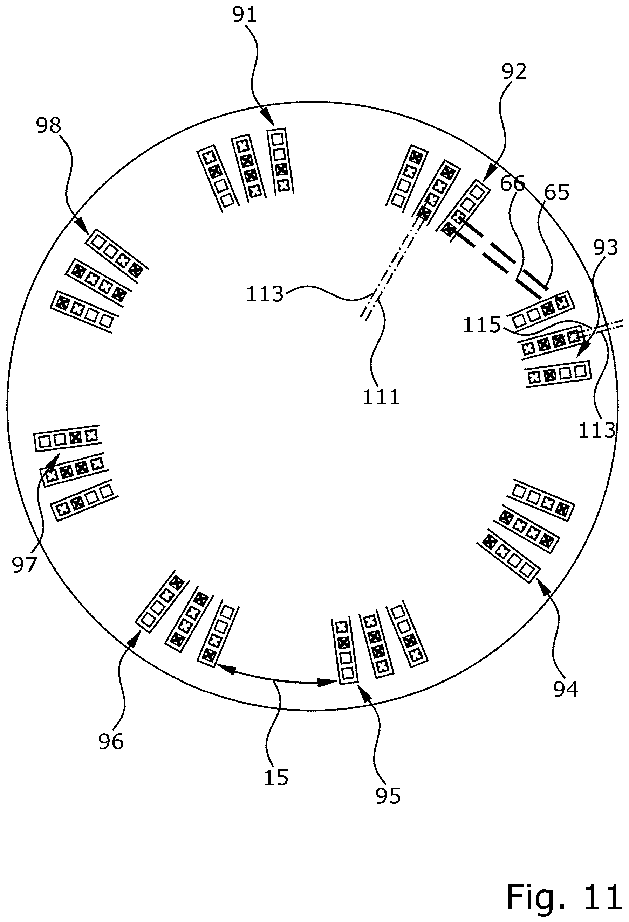

Figur 11 zeigt eine Pinbelegung durch eine fünfte und sechste Spule, in den schwarzen Vierecken mit weißem Kreuz und den weißen Vierecken mit schwarzem Kreuz, dargestellt. Diese entsteht durch ein aus den Figuren 3, 4, 5, 6, 7 bekanntes Wickelschema, welches um vier Nuten mit dem Uhrzeigersinn im Vergleich zu den dort dargestellten Pins und Verbindungen der Teilspulen versetzt ist. Ebenfalls sind die Ein- 111 und Ausgänge 113 der fünften Spule und die Ein-117 und Ausgänge 115 der sechsten Spule gezeigt. Die Ein- und Ausgänge beider Spulen liegen somit in der jeweils gleichen Nut.

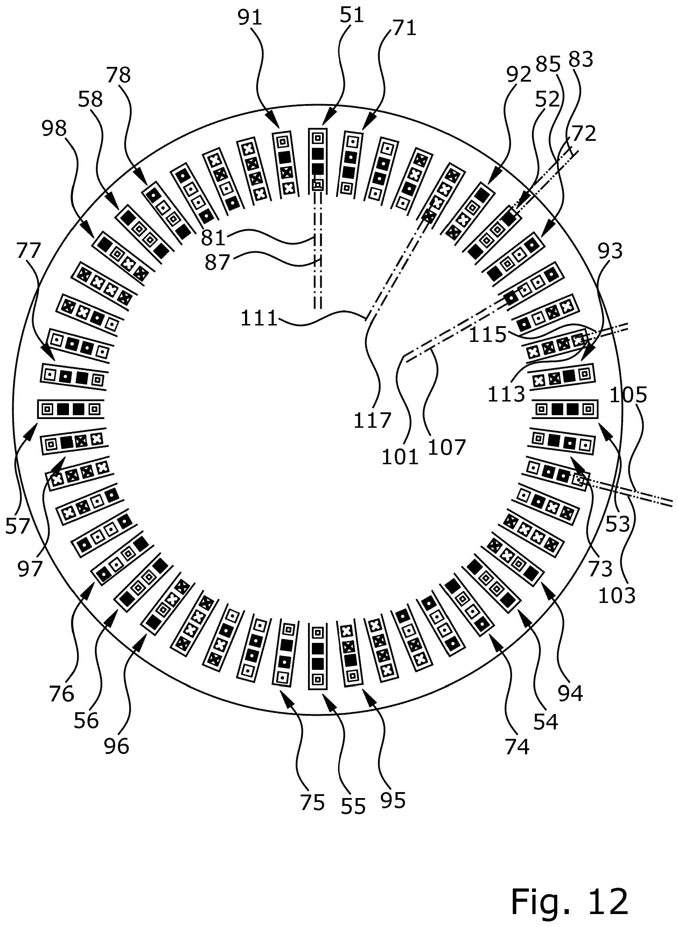

Figur 12 zeigt eine Pinbelegung durch die sechs Spulen als eine Kombination aus den Figuren 9, 10 und 11. Insbesondere aus der Lage der Ein- 81, 87, 101, 107, 111, 117 und Ausgänge 83, 85, 103, 105, 113, 115 wird ersichtlich, dass eine Verschaltung der Spulen innerhalb von jeweils 11 Nuten erfolgen kann. Bei dem exemplarisch dargestellten Stator mit achtundvierzig Nuten ist eine Verschaltung der Ein- und Ausgänge somit innerhalb von einem Drittel des Statorumfangs möglich. Rein bezogen auf die Ein- oder Ausgänge wäre eine getrennte Beschaltung auch innerhalb von fünf Nuten möglich, wenn die Spulen und deren Ein- und Ausgänge aus Figur 10 um 45 Grad gegen den Uhrzeigersinn gedreht werden. Das in Figur 12 gezeigte Ausführungsbeispiel führt zu einer Verschaltung der Ein- und Ausgänge gemäß Figur 1.

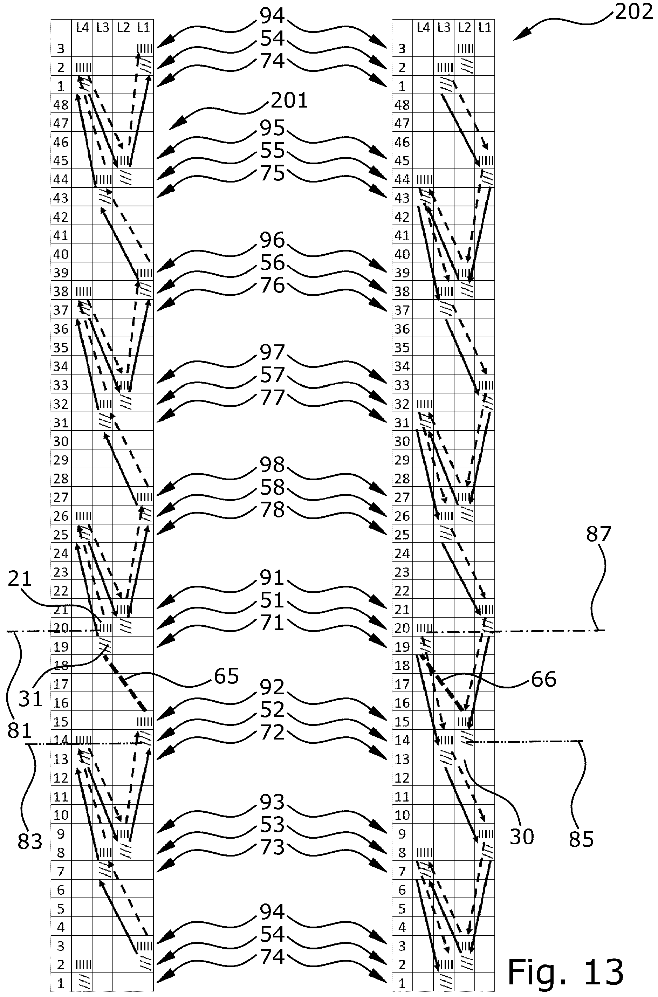

Figur 13 zeigt das Wickelschema von jeweils zwei Teilspulen der ersten Spule 201 und der zweiten Spule 202. Die fortlaufende "Nutennummer" in der Tabelle ist kein Bezugszeichen. Die Bezugszeichen mit Pfeil an den Nuten sind identisch zu den vorherigen Figuren und ermöglichen einen Vergleich mit diesen Figuren.

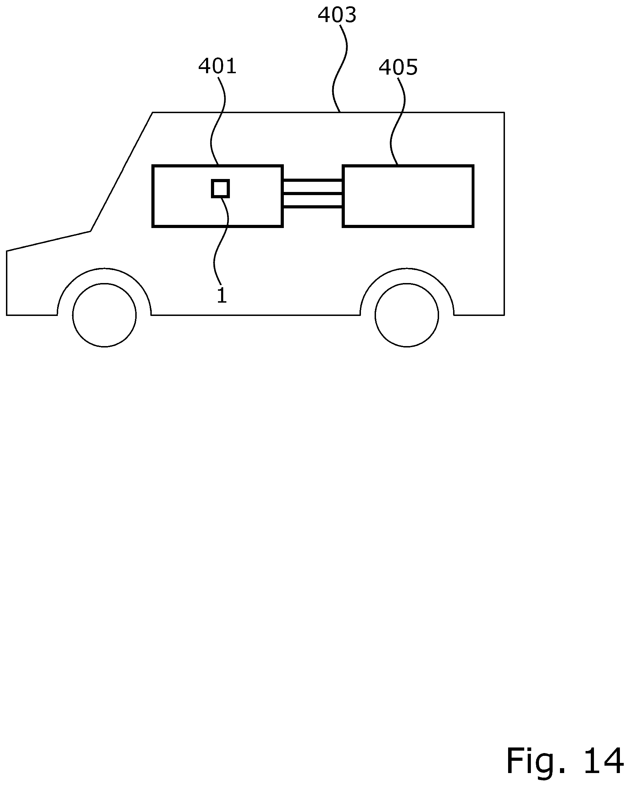

Figur 14 ist eine Prinzipskizze eines Ausführungsbeispiels eines Fahrzeugs 403, beispielsweise eines Hybridfahrzeugs oder eines Elektrofahrzeugs, umfassend eine elektrische Maschine 401, insbesondere einen Elektromotor, mit einem Ausführungsbeispiel des Stators 1 zum Antreiben des Fahrzeugs 403. Ferner kann das Fahrzeug 403 einen Inverter 405 aufweisen, der die elektrische Maschine 401 mit einem Wechselstrom aus einer Gleichstromquelle versorgt.

### Bezugszeichenliste

- 1: Stator
- 2, 3: Pin
- 7: erste Stirnseite
- 9: zweite Stirnseite
- 11: erster Abstand
- 13: zweiter Abstand
- 15: dritter Abstand
- 21: erster Endpin
- 28: zweiter Endpin
- 31: dritter Endpin
- 38: vierter Endpin
- 21a: erster Endpin
- 28a: zweiter Endpin
- 31a: dritter Endpin
- 38a: vierter Endpin
- 22 - 27, 22a - 27a: Pins
- 32 - 37, 32a - 37a: Pins
- 41 - 48: Windung
- 51 - 58: Nuten
- 61: erste Verbindungsart
- 62: zweite Verbindungsart
- 63: dritte Verbindungsart
- 64: vierte Verbindungsart
- 65: fünfte Verbindungsart
- 66: sechste Verbindungsart
- 71 - 78: Nuten
- 81, 87, 101, 107, 111, 117: Eingang
- 83, 85, 103, 105, 113, 115: Ausgang
- 91 - 98: Nuten
- 201: erste Spule
- 202: zweite Spule
- 401: elektrische Maschine
- 403: Fahrzeug
- 405: Inverter
- L1, L2, L3, L4: Layer
- M: Statormittelpunkt

## Patentansprüche

1. Stator (1) für eine elektrische Maschine (100), umfassend eine erste Stirnseite (7), eine gegenüberliegende zweite Stirnseite (9) und eine Vielzahl von Pins (21, 22, 23, 24, 25), die auf konzentrischen Kreisen mit unterschiedlichen Abständen zu einem Statormittelpunkt (M) in Nuten (51 - 58, 91 -98) im Stator (1) angeordnet sind, wobei jeder konzentrische Kreis einen Layer (L1, L2, L3, L4) bildet, wobei
- der Stator (1) eine Vielzahl von Windungen (41, 42) aufweist, die sich über den gesamten Umfang des Stators (1) erstrecken und dabei eine Teilspule bilden,
- jeweils vier Pins (21, 22, 23, 24, 25) in unterschiedlichen Layer (L1, L2, L3, L4) miteinander seriell verbunden sind und eine Windung (41) bilden,
- sich ein erster Pin (21) der ersten Windung (41) in einer ersten Nut (51) im dritten Layer (L3) befindet,
- sich ein zweiter Pin (22) der ersten Windung (41) in einer zweiten Nut (58) im vierten Layer (L4) befindet und mit dem ersten Pin (21) auf der zweiten Stirnseite (9) mittels einer ersten Verbindungsart (61) verbunden ist, wobei die zweite Nut (58) einen ersten radialen Abstand (11) in einer ersten Umfangsrichtung des Stators (1) zu der ersten Nut (51) aufweist,
- sich ein dritter Pin (23) der ersten Windung (41) in einer dritten Nut (91) im zweiten Layer (L2) befindet und mit dem zweiten Pin (22) auf der ersten Stirnseite (7) mittels einer zweiten Verbindungsart (62) verbunden ist, wobei die dritte Nut (91) benachbart zur ersten Nut (51) liegt,
- sich ein vierter Pin (24) der ersten Windung (41) in einer vierten Nut (98) im ersten Layer (L1) befindet und mit dem dritten Pin (23) auf der zweiten Stirnseite (9) mittels einer dritten Verbindungsart (63) verbunden ist, wobei die vierte Nut (98) benachbart zur zweiten Nut (58) liegt, wobei die dritte und vierte Nut (91, 98) in Umfangsrichtung auf einer gleichen Nachbarschaftsseite der ersten und zweiten Nut (51, 58) liegen, wobei zwischen der dritten Nut (91) und der vierten Nut (98) der erste Abstand (11) liegt, zwischen der dritten Nut (91) und der zweiten Nut (58) ein zweiter Abstand (13) liegt und der zweite Abstand (13) kleiner als der erste Abstand (11) ist,
- zumindest der vierte Pin (24) in der vierten Nut (98, 96, 94) mit einem fünften Pin (25) im dritten Layer (L3) in einer fünften Nut (57) mittels einer vierten Verbindungsart (64) verbunden ist,
- mit dem fünften Pin (25) die serielle Verbindung der im Stator (1) nachfolgenden Pins erneut beginnt, und
- sich die erste, zweite und dritte Verbindungsart (61, 62, 63) voneinander unterscheiden.

2. Stator (1) gemäß Anspruch 1, wobei zwei Teilspulen vorgesehen sind, die mittels einer fünften Verbindungsart (65) oder einer sechsten Verbindungsart (66) miteinander verbunden ist und eine Spule (201, 202) bilden.

3. Stator (1) gemäß Anspruch 2, wobei der Stator (1) drei Phasen aufweist, wobei jeweils zwei Spulen (201, 202) derart einer der drei Phasen zugeordnet sind, dass sich jeweils zwei Spulen, die einer gleichen Phase zugeordnet sind, in drei benachbarten Nuten (51 - 58, 71 - 78, 91 - 98) befinden und dabei jeweils zwei Layer der beiden äußeren Nuten (71 - 78, 91 - 98) mit Pins von anderen Phasen belegt sind.

4. Stator (1) gemäß Anspruch 3, wobei ein Eingang (81, 101, 111, 87, 107, 117) von mindestens zwei Spulen (201, 202) mittels einer sechsten Verbindungsart (66) miteinander verbunden sind.

5. Stator (1) gemäß Anspruch 4, wobei je ein Ausgang (83, 103, 113, 85, 105, 115) von mindestens zwei Spulen (201, 202) miteinander verbunden ist und die zwei Spulen (201, 202) dadurch parallelgeschaltet sind.

6. Fahrzeug (403) mit einer elektrischen Maschine (401) mit einem Stator (1) gemäß einem der vorherigen Ansprüche.

## Claims

1. Stator (1) for an electric machine (100), comprising a first end face (7), an opposite second end face (9) and a multiplicity of pins (21, 22, 23, 24, 25), which are arranged on concentric circles at different distances from a stator centre point (M) in slots (51-58, 91-98) in the stator (1), wherein each concentric circle forms a layer (L1, L2, L3, L4), wherein
- the stator (1) has a multiplicity of windings (41, 42), which extend over the entire circumference of the stator (1) and thereby form a partial-coil;
- in each case four pins (21, 22, 23, 24, 25) in different layers (L1, L2, L3, L4) are connected to one another in series and form a winding (41),
- a first pin (21) of the first winding (41) is located in a first slot (51) in the third layer (L3),
- a second pin (22) of the first winding (41) is located in a second slot (58) in the fourth layer (L4) and is connected to the first pin (21) on the second end face (9) by means of a first type of connection (61), wherein the second slot (58) is at a first radial distance (11) from the first slot (51) in a first circumferential direction of the stator (1),
- a third pin (23) of the first winding (41) is located in a third slot (91) in the second layer (L2) and is connected to the second pin (22) on the first end face (7) by means of a second type of connection (62), wherein the third slot (91) lies adjacent to the first slot (51),
- a fourth pin (24) of the first winding (41) is located in a fourth slot (98) in the first layer (L1) and is connected to the third pin (23) on the second end face (9) by means of a third type of connection (63), wherein the fourth slot (98) lies adjacent to the second slot (58), wherein the third and fourth slots (91, 98) in the circumferential direction lie on the same neighbouring side of the first and second slots (51, 58), wherein the first distance (11) lies between the third slot (91) and the fourth slot (98), a second distance (13) lies between the third slot (91) and the second slot (58) and the second distance (13) is smaller than the first distance (11),
- at least the fourth pin (24) in the fourth slot (98, 96, 94) is connected to a fifth pin (25) in the third layer (L3) in a fifth slot (57) by means of a fourth type of connection (64),
- with the fifth pin (25), the serial connection of the subsequent pins in the stator (1) begins again, and
- the first, second and third types of connection (61, 62, 63) differ from one another.

2. Stator (1) according to Claim 1, wherein two partial-coils are provided, which are connected to one another by means of a fifth type of connection (65) or a sixth type of connection (66) and form a coil (201, 202).

3. Stator (1) according to Claim 2, wherein the stator (1) has three phases, wherein in each case two coils (201, 202) are assigned to one of the three phases in such a way that in each case two coils which are assigned to the same phase are located in three adjacent slots (51-58, 71-78, 91-98) and thus in each case two layers of the two outer slots (71-78, 91-98) are occupied with pins of other phases.

4. Stator (1) according to Claim 3, wherein respective inputs (81, 101, 111, 87, 107, 117) of at least two coils (201, 202) are connected to one another by means of a sixth type of connection (66).

5. Stator (1) according to Claim 4, wherein respective outputs (83, 103, 113, 85, 105, 115) of at least two coils (201, 202) are connected to one another and the two coils (201, 202) as a result are connected in parallel.

6. Vehicle (403) having an electric machine (401) with a stator (1) according to one of the preceding claims.

## Revendications

1. Stator (1) pour une machine électrique (100), comprenant une première face d'extrémité (7), une deuxième face d'extrémité opposée (9) et une pluralité d'épingles (21, 22, 23, 24, 25) agencées sur des cercles concentriques à différentes distances d'un centre de stator (M) dans des encoches (51-58, 91-98) dans le stator (1), chaque cercle concentrique formant une couche (L1, L2, L3, L4), dans lequel
- le stator (1) comporte une pluralité de spires (41, 42) qui s'étendent sur toute la circonférence du stator (1), formant ainsi une bobine partielle ;
- quatre épingles (21, 22, 23, 24, 25) sont respectivement reliées en série les unes aux autres dans différentes couches (L1, L2, L3, L4) et forment une spire (41),
- une première épingle (21) de la première spire (41) se trouve dans une première encoche (51) dans la troisième couche (L3),
- une deuxième épingle (22) de la première spire (41) se trouve dans une deuxième encoche (58) dans la quatrième couche (L4) et est reliée à la première épingle (21) sur la deuxième face d'extrémité (9) au moyen d'un premier type de liaison (61), la deuxième encoche (58) présentant une première distance radiale (11) dans une première direction circonférentielle du stator (1) par rapport à la première encoche (51),
- une troisième épingle (23) de la première spire (41) se trouve dans une troisième encoche (91) dans la deuxième couche (L2) et est reliée à la deuxième épingle (22) sur la première face (7) au moyen d'un deuxième type de liaison (62), la troisième encoche (91) étant adjacente à la première encoche (51),
- une quatrième épingle (24) de la première spire (41) est située dans une quatrième encoche (98) dans la première couche (L1) et est connectée à la troisième épingle (23) sur la deuxième face d'extrémité (9) au moyen d'un troisième type de connexion (63), la quatrième encoche (98) étant adjacente à la deuxième encoche (58), les troisième et quatrième encoches (91, 98) se trouvent dans la direction circonférentielle sur un même côté de voisinage des première et deuxième encoches (51, 58), la première distance (11) étant située entre la troisième encoche (91) et la quatrième encoche (98), une deuxième distance (13) étant située entre la troisième encoche (91) et la deuxième encoche (58), et la deuxième distance (13) étant inférieure à la première distance (11),
- au moins la quatrième épingle (24) dans la quatrième encoche (98, 96, 94) est connectée à une cinquième épingle (25) dans la troisième couche (L3) dans une cinquième encoche (57) au moyen d'un quatrième type de connexion (64),
- avec la cinquième épingle (25), la connexion en série des épingles suivantes dans le stator (1) recommence, et
- les premier, deuxième et troisième types de connexion (61, 62, 63) sont différents les uns des autres.

2. Stator (1) selon la revendication 1, dans lequel il est prévu deux bobines partielles qui sont reliées entre elles au moyen d'un cinquième type de liaison (65) ou d'un sixième type de liaison (66) et qui forment une bobine (201, 202).

3. Stator (1) selon la revendication 2, dans lequel le stator (1) présente trois phases, deux bobines (201, 202) étant respectivement associées à l'une des trois phases de telle sorte que deux bobines respectivement associées à une même phase se trouvent dans trois encoches voisines (51 - 58, 71 - 78, 91 - 98) et que deux couches respectives des deux encoches extérieures (71 - 78, 91 - 98) sont occupées par des épingles d'autres phases.

4. Stator (1) selon la revendication 3, dans lequel une entrée (81, 101, 111, 87, 107, 117) d'au moins deux bobines (201, 202) sont reliées entre elles au moyen d'un sixième type de connexion (66).

5. Stator (1) selon la revendication 4, dans lequel une sortie (83, 103, 113, 85, 105, 115) de chacune parmi au moins deux bobines (201, 202) sont reliées entre elles, les deux bobines (201, 202) étant ainsi connectées en parallèle.

6. Véhicule (403) comprenant une machine électrique (401) avec un stator (1) selon l'une des revendications précédentes.
